# EUROPÄISCHE PATENTSCHRIFT

(11) **EP 3 867 544 B1**
(45) Veröffentlichungstag und Bekanntmachung des Hinweises auf die Patenterteilung: **06.07.2022**
(21) Anmeldenummer: 19801213.0
(22) Anmeldetag: 21.10.2019
(51) Int. Cl.: F16D 65/18, F16D 65/56

(54) **SCHEIBENBREMSE**
DISK BRAKE
FREIN À DISQUE

(30) Priorität: 19.10.2018 DE 102018126120
(43) Veröffentlichungstag der Anmeldung: 25.08.2021
(73) Patentinhaber: Haldex Brake Products AB, 261 24 Landskrona (SE)
(72) Erfinder: SANDBERG, Stefan, 23435 Lomma (SE)
(74) Vertreter: Habermann, Hruschka & Schnabel
(86) Internationale Anmeldenummer: PCT/EP2019/078588
(87) Internationale Veröffentlichungsnummer: WO 2020/079279

(56) Entgegenhaltungen:
- WO-A1-2018/015565
- WO-A2-2015/140225

## Beschreibung

Die vorliegende Erfindung betrifft eine Scheibenbremse, insbesondere für Nutzfahrzeuge, mit einem optimierten Bremsbetätigungsmechanismus.

Hierbei sind von der Erfindung Scheibenbremsen umfasst, die entweder einen Gleitsattel oder einen Festsattel aufweisen, und die eine oder mehrere Bremsscheiben übergreifen. Die Erfindung bezieht sich hauptsächlich, aber nicht ausschließlich, auf Teilbelag-Scheibenbremsen.

Scheibenbremsen, insbesondere für Schwerlastkraftwagen, sind in den unterschiedlichsten Ausführungsformen bekannt, sowohl was die Art des Bremsbetätigungsmechanismus, die Art und Weise der Übertragung der Bremskraft auf eine oder mehrere Bremsscheiben als auch die Art der Nachstellung zum Ausgleich eines Verschleißes der Bremsbeläge angeht.

Eine spezielle Ausführungsform einer Bremsbetätigungsvorrichtung, die in Scheibenbremsen zum Einsatz kommt, ist beispielsweise aus der Internationalen Anmeldung WO 2011/113554 A2 der Anmelderin bekannt. Der aus dieser Anmeldung bekannte Bremsbetätigungsmechanismus zeichnet sich durch einen äußerst kompakten Aufbau aus, der mit einem geringeren Raumbedarf in dem Gehäuse des Bremssattels und mit einem geringeren Gewicht einhergeht. Sämtliche Komponenten dieses Bremsbetätigungsmechanismus sind mittels eines in dem Gehäuse des Bremssattels in Axialrichtung gelagerten Stabs funktional zusammenwirkend in dem Bremssattel so montiert, dass diese parallel zu der Rotationsachse der Bremsscheibe wirken. Infolge einer Verlagerungsbewegung des Verstärkungsmechanismus führt ein Druckelement zusammen mit einer Nachstelleinrichtung eine Translationsbewegung in Richtung auf die Bremsscheibe aus, um die Zuspannkraft zu übertragen.

Die Nachstelleinrichtung für den Ausgleich des Verschleißes weist eine Momentenkupplung auf, die drehmomentgesteuert ist und der selektiven Übertragung einer drehrichtungsabhängigen Rotation zwischen Bauteilen der Momentenkupplung dient. Darüber hinaus weist die Nachstelleinrichtung noch eine Einwegkupplung auf, bei der zwei auf dem Stab drehbar gelagerte Elemente, eine innere Aufnahmehülse und eine Hohlwelle mittels einer Freilauffeder miteinander verbunden sind, wobei die Einwegkupplung dabei so konzipiert ist, dass diese während einer Bremsbetätigung eine Drehbewegung zwischen den beiden Elementen überträgt, während diese bei Bremsfreigabe durchrutscht.

Zur genauen Funktionsweise hinsichtlich Zustellung und Übertragung der Bremskraft sowie der Nachstellbewegung bei dem aus dem Stand der Technik bekannten Bremsbetätigungsmechanismus wird hiermit ausdrücklich auf den Offenbarungsgehalt der WO 2011/113554 A2 verwiesen. Weitere, ähnlich konzipierte Bremsbetätigungsmechanismen sind beispielsweise aus der WO 2013/083857 A2, der WO 2014/106672 A2, der WO 2015/140225 A2 oder der WO 2018/015565 A2 der Anmelderin bekannt, auf deren Offenbarungsgehalt hiermit jeweils ebenfalls ausdrücklich Bezug genommen wird.

Aus diesem Stand der Technik ist grundsätzlich der Einsatz von einen oder mehreren Freilauffedern in einer Nachstelleinrichtung des Bremsbetätigungsmechanismus bekannt, die als Schlingfedern oder Wickelfedervorrichtungen konzipiert sind. Dabei kommen sie einerseits als Einwegkupplung zum Einsatz, die zwei Teile des Nachstellmechanismus zum Zwecke einer Nachstellung und/oder einer Drehblockierung in einer Drehrichtung miteinander verbindet, sie aber bei einem nahezu ignorierbaren Drehmomentwiderstand relativ zueinander in die entgegengesetzte Richtung drehen lässt. Andererseits liegt eine weitere Anwendung darin, derartige Schlingfedern in dem Nachstellmechanismus als Drehmomentbegrenzer mit einer erhöhten radialen Vorspannung vorzusehen, um eine Relativdrehung zwischen zwei Teilen in der Nichtverriegelungsrichtung der Schlingfeder nur oberhalb eines beträchtlichen Drehmoments zu ermöglichen, wodurch sich das Ende der freien Bewegung der Bremsbeläge bei Bremsbetätigung und damit das tatsächliche Lüftspiel zwischen dem Bremsbelag und der Bremsscheibe bestimmen lässt.

Beispielsweise ist bei dem in der oben genannten Int. Patentanmeldung WO 2015/140225 A2 beschriebenen Bremsbetätigungsmechanismus eine Nachstelleinrichtung zum Ausgleich des Belagverschleißes vorgesehen, bei der ein Drehmomentbegrenzer als eine Rollen-Rampen-Kupplung und eine Einwegkupplung als Schlingfedervorrichtung verwirklicht sind. Die Einwegkupplung überträgt die Drehung bei Bremsbetätigung zur Verschleißeinstellung, rutscht jedoch bei Bremslüftung bzw. Bremsfreigabe und überträgt dann keine Drehung. Dieser Schlupf bei Bremsfreigabe ist unerlässlich, um eine unerwünschte Rückwärtsdrehung der Nachstellspindel zu vermeiden, die die Verschleißnachstellung ansonsten beeinträchtigen würde.

In einer solchen Nachstelleinrichtung kann einer unerwünschten Rückwärtsdrehung der Nachstellspindel durch eine erhöhte Reibung z.B. im Gewindekontakt zwischen der Nachstellspindel und dem mit ihr in Gewindeeingriff stehenden Druckstück entgegengewirkt werden, allerdings mit dem Problem, dass manchmal eine zu große Reibung verursacht wird, die die Nachstelldrehung der Nachstellspindel bei Bremsbetätigung unter Umständen einschränken könnte. Zur Lösung dieses Problems wurde daher in der WO 2015/140225 A2 vorgeschlagen, eine zusätzliche Reibungsvorrichtung mit einem federbelasteten Reibungselement vorzusehen, das auf die Nachstellschraube oder auf ein daran drehfestes Teil wirkt. Derartige zusätzliche Reibungselemente bieten in der Regel einen gut kontrollierten und steuerbaren Drehmomentwiderstand infolge der definierten Federvorspannung. Dennoch kann die Notwendigkeit bestehen, den Einfluss von Reibungsschwankungen weiter bzw. insgesamt zu minimieren.

So ist es allgemein bekannt, dass die Reibung zu Beginn eines Gleitvorgangs zwischen zwei Bauteilen bzw. Flächen größer ist als bei einem anschließenden weiteren Gleitprozess; ebenso kann sie nach einer langen Zeit des Stillstands größer sein als nach einer kurzen Stillstandzeit. Derartige übermäßige Reibungsverhältnisse können trotz einer konstanten Federvorspannkraft auftreten. Bei Bremsbetätigung begrenzt eine übermäßige Reibung die Nachstelldrehung und verursacht eine übermäßige Drehmomentbelastung und reduziert dadurch die Lebensdauer der Komponenten im Nachstellmechanismus, z.B. der oben genannten Einwegkupplung.

Bei der Ausführungsform der in der oben genannten Int. Patentanmeldung WO 2018/015565 A2 beschriebenen Nachstellvorrichtung ist ein Drehmomentbegrenzer dadurch realisiert, dass eine Wickelfeder- oder Schlingfedervorrichtung mit einer erhöhten radialen Vorspannung und eine ebenfalls als Schlingfeder konzipierte Einwegkupplung vorgesehen sind. Darüber hinaus ist eine dritte Freilauffeder- bzw. Schlingfedervorrichtung vorgesehen, die derart ausgestaltet und innerhalb der Nachstelleinrichtung so angeordnet ist, dass eine unerwünschte Rückwärtsdrehung der Nachstellspindel beim Lösen der Bremse verhindert wird. Eine unerwünschte Vorwärtsdrehung der Nachstellspindel im gelösten Zustand der Bremse wird durch einen von der Rückstellfeder zusammengedrückten Gleitlagerring verhindert. Dies gestattet ein Gleiten bei einem bestimmten Drehmoment zwischen dem mit der Nachstellspindel verbundenen Drehmomentbegrenzer und der mit dem in Axialrichtung fixierten zentralen Stab verbundenen Rückstellfeder. Ein wesentlicher Effekt des Gleitrings besteht darin, dass die dort vorherrschende Reibung die durch Fahrzeugvibrationen unter Umständen induzierte Vorwärtsdrehung der Nachstellspindel im Wesentlichen verhindert, die ansonsten den Bremsbelag in Kontakt mit der rotierenden Bremsscheibe bringen würde, was dann zu einer Überhitzung der Bremse führen kann.

Tatsächlich jedoch kann der Gleitlagerring des Nachstellmechanismus der WO 2018/015565 A2 unter Umständen ähnliche Nachteile aufweisen wie die zusätzliche Reibungsvorrichtung beim Nachstellmechanismus der WO 2015/140225 A2. So können Reibungsschwankungen manchmal einen hohen Widerstand gegenüber der Nachstelldrehung bei Bremsbetätigung verursachen, wodurch es zu einer übermäßigen Drehmomentbelastung kommen kann, die wiederum mit einer reduzierten Lebensdauer der Komponenten im Nachstellmechanismus, insbesondere der Einwegkupplung, einhergeht.

Ausgehend von den oben geschilderten Nachteilen im Zusammenhang mit derartigen Nachstelleinrichtungen bei Scheibenbremsen im Stand der Technik ist es eine Aufgabe der vorliegenden Erfindung, eine einwandfrei und fehlerfrei funktionierte Nachstellung des Belagverschleißes insbesondere für solche Konstruktionen von Nachstelleinrichtungen zu realisieren und in diesem Zusammenhang eine optimierte Nachstelleinrichtung für Scheibenbremsen, insbesondere der vorhergehend geschilderten Gattung, zur Verfügung zu stellen.

Gelöst wird diese Aufgabe mit einer Scheibenbremse nach Anspruch 1. Vorteilhafte Weiterbildungen der Erfindung ergeben sich aus den abhängigen Ansprüchen.

Demzufolge betrifft die Erfindung eine Scheibenbremse mit einem Bremssattel, der zumindest eine Bremsscheibe übergreift, und mit einem Bremsbetätigungsmechanismus, aufweisend:
- einen Verstärkungsmechanismus zum Einleiten einer Zuspannkraft,
- einen Nachstellmechanismus zum Ausgleich eines Belagverschleißes mit einer Drehmomentkupplung,
- ein Druckelement zum Übertragen der Zuspannkraft auf die Bremsscheibe, wobei das Druckelement eine Nachstellspindel aufweist, die in einem Gewindeeingriff mit einem Druckstück steht, das mit einem Bremsbelag zusammenwirkt, wobei das Druckstück axial und nicht-drehbar in dem Gehäuse des Bremssattels so geführt ist, dass eine Drehung der Nachstellspindel in einer axialen Verschiebung des Druckstücks resultiert, wobei die Nachstellspindel von dem Nachstellmechanismus betätigbar ist, und
- eine Rückstellvorrichtung,
wobei der Verstärkungsmechanismus, der Nachstellmechanismus, das Druckelement und die Rückstellvorrichtung in einer funktional zusammenwirkenden Art und Weise mittels eines Stabs in dem Bremssattel montiert sind, der in dem Gehäuse des Bremssattels in Axialrichtung nicht beweglich und nicht drehbar gelagert ist,
und wobei zumindest ein Mittel vorgesehen ist, das ausgestaltet ist, während des Nachstellvorgangs beim Bremsvorgang inaktiv zu sein und bei Bremsfreigabe und/oder im freigegebenen Zustand der Bremse ein definiertes Widerstandsmoment gegen ein Drehen der Nachstellspindel zur Verfügung zu stellen.

Das Mittel soll gemäß der Erfindung dabei so konzipiert sein, dass dieses Widerstandsmoment zusätzlich zu einem durch bereits im Nachstellmechanismus vorgesehene bzw. implementierte Komponenten, wie ein oder mehrere bereits vorhandene Freilauffeder(n), die als Einwegkupplungen und/oder Drehmomentbegrenzer fungieren, ausgeübten Widerstands- bzw. Reibmomenten in Erscheinung tritt. Insbesondere soll das Mittel so konzipiert sein, dass es die Reibung im Nachstellmechanismus, vorzugsweise zwischen zwei relativ zueinander beweglichen bzw. drehbaren Komponenten des Nachstellmechanismus um ein definiertes Maß bzw. Reibmoment erhöht. Mit anderen Worten, das Mittel gemäß der Erfindung appliziert eine zusätzliche Reibung im System.

Gemäß einer bevorzugten Ausführungsform der Erfindung ist dieses Mittel als eine Freilauffeder oder Schlingfeder ausgebildet, die so konzipiert ist, dass deren Freilauf bei Bremsbetätigung und deren Sperrwirkung bei Bremsfreigabe und/oder im freigegebenen Zustand der Scheibenbremse wirkt.

Die vorliegende Erfindung schlägt im Kern eine neue Verwendung einer Schlingfedervorrichtung in einem Bremsnachsteller vor, der bereits eine oder mehrere Schlingfedervorrichtungen für die vorgenannten Zwecke umfassen kann. Das Vorsehen einer weiteren Wickel- bzw. Schlingfedervorrichtung verhindert eine unerwünschte Drehung der Nachstellspindel beim Lösen der Bremse und/oder im gelösten Zustand der Bremse. In diesen Situationen kann eine unerwünschte Drehung durch eine Reibung in der Nicht-Verriegelungsrichtung einer Einwegkupplung im Nachsteller selbst oder durch Fahrzeugvibrationen oder eine Kombination davon verursacht werden.

Die zumindest eine zusätzliche Schlingfeder erweist sich zu diesem Zweck gegenüber den bereits in den Nachstellmechanismen vorhandenen Vorrichtungen zur Aufbringung einer Reibung bzw. eines Widerstandsmoments gemäß dem oben geschilderten Stand der Technik als vorteilhaft, da sie eine wesentlich genauer bestimmbare Drehmomentbegrenzung auszuüben vermag. Dadurch können temporäre Drehmomentspitzen vermieden werden, z.B. bei Gleitbeginn des Nachstellvorgangs während der Bremsbetätigung. Es ist bekannt, dass derartige Drehmomentspitzen bei den Nachstellmechanismen des oben geschilderten Standes der Technik unter gewissen Umständen zu hohen Belastungen und damit verkürzter Lebensdauer von wesentlichen Komponenten der Nachstelleinrichtung, wie z.B. der Einwegkupplung, führen können.

Gemäß einer Ausführungsform der Erfindung kann die Schlingfeder mittelbar oder unmittelbar mit der Nachstellspindel gekoppelt sein. Insbesondere koppelt die Schlingfeder eine Hülse mit der Nachstellspindel, wobei die Hülse radial innenseitig in der Nachstellspindel drehbar gelagert ist. Vorzugsweise kann die Hülse mit der Rückstellvorrichtung drehfest gekoppelt sein. Bei dieser Ausführungsform soll ausschließlich eine unerwünschte Spindeldrehung durch die mittels der Schlingfeder bereitgestellte Einwegkupplung beim Lösen der Bremse verhindert werden.

Gemäß einer weiteren Ausführungsform der Erfindung kann die Schlingfeder mittelbar oder unmittelbar mit dem Nachstellmechanismus gekoppelt sein. Vorzugsweise koppelt die Schlingfeder die Rückstellvorrichtung mit der Nachstellvorrichtung und insbesondere koppelt die Schlingfeder die Rückstellfeder mit der Nachstellvorrichtung unter Zwischenschaltung eines Kugellagers. Diese Ausführungsform soll bevorzugt dazu dienen, einer unerwünschten Drehung der Nachstellspindel durch Fahrzeugvibrationen entgegenzuwirken.

Weitere Vorteile und Merkmale der Erfindung ergeben sich aus der nachfolgenden Beschreibung der anhand der Zeichnungen dargestellten Ausführungsbeispiele. Es zeigen
- Fig. 1: eine erste Ausführungsform eines Bremsbetätigungsmechanismus gemäß der Erfindung;
- Fig. 2: eine zweite Ausführungsform eines Bremsbetätigungsmechanismus gemäß der Erfindung;
- Fig. 3: eine vergrößerte Ansicht der Nachstelleinrichtung aus Fig. 2; und
- Fig. 4: einen Querschnitt entlang A - A aus Fig. 3.

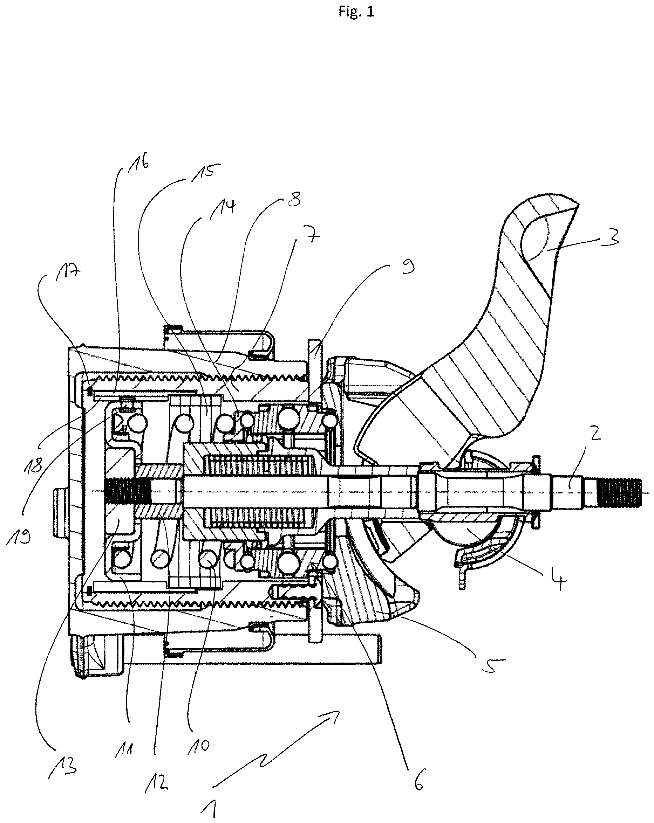

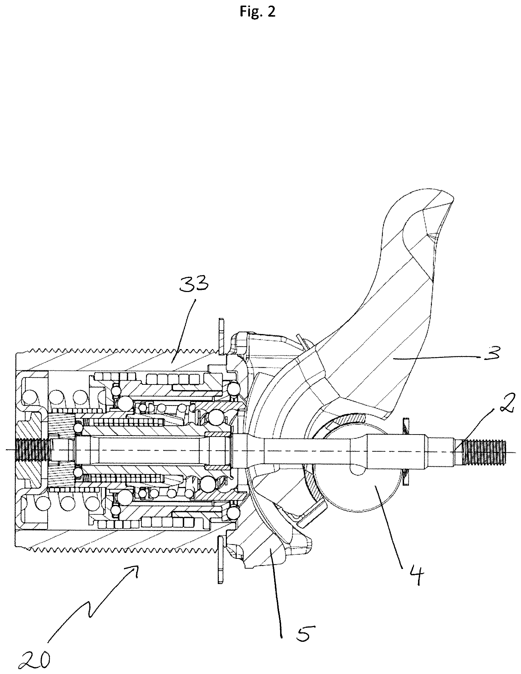

Die Fig. 1 zeigt eine erste Ausführungsform eines Bremsbetätigungsmechanismus 1 für eine Scheibenbremse gemäß der Erfindung. Im Prinzip entspricht der Bremsbetätigungsmechanismus 1 konzeptionell demjenigen der Fig. 2 der Int. Patentanmeldung WO 2015/140225 A2 der Anmelderin. Hinsichtlich Aufbau und Funktionsweise der dort gezeigten Nachstelleinrichtung soll auf den Offenbarungsgehalt der WO 2015/140225 A2 verwiesen werden, auf den hiermit ausdrücklich Bezug genommen wird.

Der Bremsbetätigungsmechanismus 1 besteht im Wesentlichen aus einem Verstärkungsmechanismus, der die von einem hydraulischen, pneumatischen oder elektromechanischen Aktuator (hier nicht dargestellt) stammende Aktuatorkraft als Zuspannkraft in den Bremsbetätigungsmechanismus 1 einleitet und dabei entsprechend einem konstruktionsbedingt vorgegebenen Übersetzungsverhältnis verstärkt, aus einer Nachstelleinrichtung, die zum Ausgleich eines Bremsbelagverschleißes dient, aus einem Druckelement, das die verstärkte Zuspannkraft auf die Bremsscheibe überträgt, und aus einer Rückstelleinrichtung, um den Bremsbetätigungsmechanismus 1 in seine Ausgangslage zurückzustellen, wenn keine Bremskraft über den Aktuator, der sich außerhalb des Gehäuses des Bremssattels befindet, mehr einwirkt.

Ein wesentliches Merkmal der Scheibenbremse bzw. des Bremsbetätigungsmechanismus gemäß der Erfindung ist hierbei, dass die vorgenannten Baugruppen auf einem zentralen Stab 2 angeordnet sind, der koaxial zu der Achse der Bremsscheibe ausgerichtet ist. Der Stab 2 dient als Montagemittel für die einzelnen Baugruppen des Bremsbetätigungsmechanismus 1 einerseits und als Befestigungsmittel für diesen in dem Gehäuse des Bremssattels andererseits.

Der Verstärkungsmechanismus weist einen Hebel 3 auf, an dem beispielsweise ein Stab eines Pneumatikzylinders angreift. Der Hebel 3 ist in einem rückwärtigen Gehäuseabschnitt (nicht gezeigt) des Bremssattels schwenkbar gelagert, indem sich dieser an Exzenterwalzen 4 drehbar abstützt, wobei der Hebel 3 relativ zu den Exzenterwalzen 4 so konzipiert und ausgestaltet ist, dass sich bei einer Schwenkbewegung um die Exzenterwalzen 4 eine exzentrische Verlagerung des Hebels 3 zu den Exzenterwalzen 4 einstellt, der zu einer Verstärkung der vom Aktuator in den Hebel 3 eingeleiteten Kraft führt.

Den Exzenterwalzen 4 gegenüberliegend stützt sich der Hebel 3 an einem Kraftübertragungselement 5 ab. Bremsscheibenseitig ist das Kraftübertragungselement 5 mit planen Flächen ausgebildet, um mit der Nachstelleinrichtung und dadurch mit dem Druckelement zusammen zu wirken.

Unmittelbar anschließend an den Verstärkungsmechanismus in Richtung zu der Bremsscheibe schließt sich die Nachstelleinrichtung an.

Die Nachstelleinrichtung beinhaltet eine Momentkupplung 6, die als ein Rollen-Rampen-Mechanismus ausgebildet ist. Zur genauen Funktionsweise der Momentenkupplung 6 wird auf den Offenbarungsgehalt der WO 2015/140225 A2 verwiesen.

Das Druckelement weist eine hohle Nachstellspindel 7 auf, die außenseitig mit einem Druckstück 8 über ein entsprechendes Gewinde in Eingriff steht. Die hohle Nachstellspindel 7 ist an ihrer bremsscheibenabgewandten Stirnseite mit einem Zahnrad 9 der Nachstelleinrichtung über entsprechende Verbindungselemente drehfest verbunden, wobei das Zahnrad der Anbindung eines nicht gezeigten Mechanismus für eine manuelle Rückstellung bei Belagwechsel in Verbindung steht. Das Zahnrad 9 wiederum steht mit dem Rampenkörper der Rollen-Rampen-Kupplung über eine Keil-Nut-Verbindung in einer drehfesten Verbindung. Dadurch wird eine Drehbewegung des Rampenkörpers mittelbar auf die Nachstellspindel 7 übertragen. Hierzu soll ebenfalls auf den Offenbarungsgehalt der WO 2015/140225 A2 verwiesen werden.

Die Rückstelleinrichtung schließt sich in Axialrichtung zu der Bremsscheibe hin an die Nachstelleinrichtung an und ist ebenfalls koaxial zu dem Stab 2 angeordnet.

Diese besteht aus einer Schraubenfeder 10, die sich bremsscheibenseitig an einer Widerlagerschale 11 abstützt.

Die Widerlagerschale 11 ist im Bereich des bremsscheibenseitigen Endes des Stabs 2 einerseits über einen Abstandsring 12 und andererseits über eine an dem Abstandsring 12 zur Anlage kommende Befestigungsmutter 13, die auf ein entsprechendes Gewinde am bremsscheibenseitigen Ende des Stabs 2 aufschraubbar ist, axial positioniert und befestigt, wobei die Widerlagerschale 11 jedoch eine Durchgangsöffnung mit einem solchen Durchmesser bzw. mindestens mit einem solchen Spiel aufweist, dass die Widerlagerschale 11 grundsätzlich auf dem Abstandsring 12 drehbar gelagert ist.

An ihrer gegenüberliegenden Seite stützt sich die Schraubenfeder 10 an einem Zwischenring 14 der Nachstelleinrichtung ab. Auf diese Art und Weise kann die Rückstelleinrichtung gleichzeitig als ein Mechanismus zur Aufbringung einer Drehmomentbegrenzung auf die Nachstelleinrichtung fungieren; hierzu soll ausdrücklich auf den Offenbarungsgehalt der WO 2011/113554 A2 verwiesen werden.

Wie in der Figur 1 zu erkennen ist, weist der Stab 2 eine entsprechende Konturierung mit unterschiedlichen Durchmessern und Nutanordnungen auf, um die Lagerflächen und Montagemittel für die axiale Positionierung der oben geschilderten einzelnen Baugruppen zur Verfügung zu stellen. Hierbei ist der Stab 2 auf der einen Seite und die einzelnen auf diesem gelagerten Komponenten des Verstärkungsmechanismus, der Nachstelleinrichtung und der Rückstelleinrichtung auf der anderen Seite in Axialrichtung so dimensioniert und ausgestaltet, dass im eingebauten, im rückwärtigen Teil des Bremssattels verspannten Zustand des Stabs 2 die Schraubenfeder 10 eine definierte Drehmomentbegrenzung über eine dann ausgebildete permanente Vorspannung auf die in der Nachstelleinrichtung in Form eines Rollen-Rampen-Mechanismus 6 vorliegende Momentkupplung ausübt.

Gemäß der Erfindung ist eine zusätzliche Freilauf- bzw. Schlingfeder 15 vorgesehen, die radial innenseitig an der Nachstellspindel 7 angreift.

In einer radial umlaufenden Ausnehmung der Nachstellspindel 10, die sich stirnseitig zur Bremsscheibe hin öffnet, ist eine Hülse 16 drehbar gelagert, die in Axialrichtung mittels eines Sperrrings 17 gehalten wird.

Die Hülse 16 weist eine Nut 18 auf. Die Widerlagerschale 11 weist ein nietförmiges Führungs- bzw. Verbindungselement 19 auf, das in der Nut 18 gleitend geführt ist. Auf diese Weise kann die Widerlagerschale 11 drehfest mit der Hülse 16 und über die Freilauffeder 15 somit mit der Nachstellspindel 7 verbunden werden, so dass sich die Widerlagerschale 11 mit der Nachstellspindel 7 drehen kann, dabei gleichzeitig aber eine relative axiale Verschiebung zwischen diesen Elementen ermöglicht. Dadurch, dass sich die Widerlagerschale 11 für die Schraubenfeder 10 an der Befestigungsmutter 13 abstützt, wobei die Schraubenfeder 10 über ihre vorab festgelegten Federeigenschaften eine definierte Axialfederkraft ausübt, wird zwischen der Befestigungsmutter 13 und der Widerlagerschale 11 ein definierter Reibungswiderstand erzeugt, der dann über das Verbindungselement 19 auf die Hülse 16 und dann wiederum über die Schlingfeder 15 auf die Hohlspindel 7 übertragen wird.

Um die im Zusammenhang mit dem Stand der Technik erläuterten Effekte, die im Zuge einer übermäßigen Reibung bei Bremsbetätigung bei dieser Ausführungsform auftreten können, zu vermeiden, schlägt die Erfindung die Anordnung der Schlingfeder 15 vor derart, dass diese folglich in ihrer nicht blockierenden Richtung bei der Nachstellung während der Bremsbetätigung arbeitet.

Es ist bekannt, dass das Reibungsmoment einer Schlingfeder hauptsächlich von der Biegevorspannung des Wickeldrahtes bei der Montage abhängt und die Reibung zwischen den Gleitflächen nahezu vernachlässigbar ist. Beim Lösen der Bremse arbeitet diese Vorrichtung in Verriegelungsrichtung und stoppt eine unerwünschte Rückwärtsdrehung der Nachstellspindel.

Grundsätzlich bleibt aber die Fähigkeit einer Rückwärtsdrehung in einem solchen Maß erhalten, die für eine manuelle Rückstellung des Nachstellmechanismus erforderlich ist.

Gemäß der Erfindung wirkt die zusätzliche Schlingfeder 15 folglich als ein Zwischenelement zwischen der Widerlagerschale 11 und der Nachstellspindel 7 unter Bereitstellung eines sehr konstanten Drehmomentwiderstands.

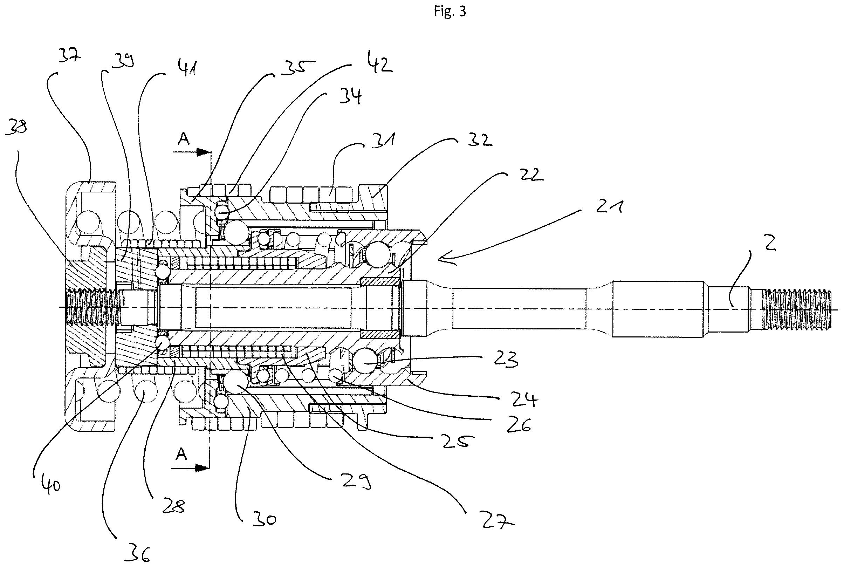

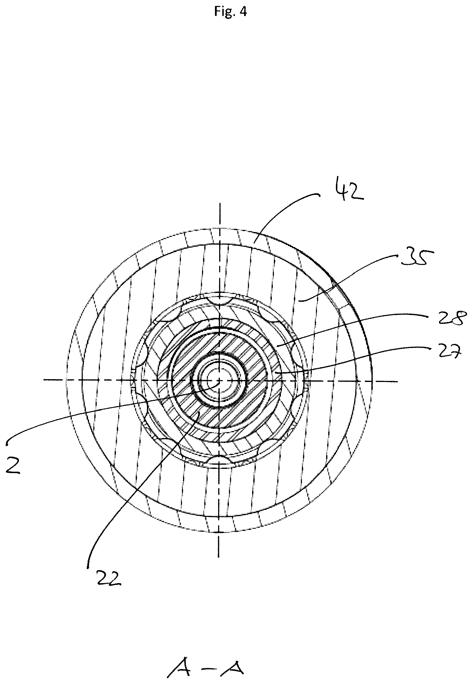

In den Figuren 2 bis 4 ist eine zweite Nachstelleinrichtung gemäß der Erfindung gezeigt, bei der ebenfalls eine, eine definierte Reibung bereitstellende zusätzliche Schlingfeder vorgesehen ist.

Der in diesen Figuren 2 bis 4 gezeigte Bremsbetätigungsmechanismus 20 bzw. die dort implementierte Nachstelleinrichtung sind hinsichtlich Aufbau und Funktionsweise nahezu identisch zu denjenigen der Fig. 1 der Int. Patentanmeldung WO 2018/015565 A2 der Anmelderin, auf deren Offenbarungsgehalt hierin ausdrücklich Bezug genommen wird.

Die Nachstelleinrichtung folgt in Axialrichtung in Bezug auf eine (hier nicht dargestellte) Bremsscheibe gesehen unmittelbar im Anschluss an den Lagersitzkörper bzw. das Kraftübertragungselement 5 und weist einen Kugelgewindetrieb 21 auf. Der Kugelgewindetrieb 21 weist eine Hohlspindel 22 auf, die sich in einen bremsscheibenabgewandten, dem Lagersitzkörper 5 zugewandten Gewindeabschnitt und einen bremsscheibenzugewandten Zylinderabschnitt unterteilt. Der Gewindeabschnitt steht über Kugeln 23 mit einer den Gewindeabschnitt radial umgebenden Mutter 24 in Verbindung, die das Antriebselement des Kugelgewindetriebs 21 bildet. Gleichzeitig bildet die Hohlspindel 22 als Abtriebselement des Kugelgewindetriebs 21 das Eingangselement für die Nachstelleinrichtung; zum weiteren Verständnis soll hierzu auch auf den Offenbarungsgehalt der WO 2018/015565 A2 verwiesen werden.

Auf der Hohlspindel 22 ist im Bereich des Zylinderabschnitts eine Kupplungshülse 25 angeordnet, die mit der Hohlspindel 22 über eine Presspassung drehfest verbunden ist. Die Kupplungshülse 25 weist einen umlaufenden Flanschring auf, an dem sich eine Feder 26 abstützt.

Die Kupplungshülse 25 ist über eine erste Freilauffeder 27 mit einer Radiallagernabe 28 gekoppelt. Die Kupplungshülse 25 und die Radiallagernabe 28 schließen die erste Freilauffeder 27 radial ein und bilden so eine erste Momentenkupplung aus.

Die Radiallagernabe 28 steht über ein Radiallager 29 mit einer vorderen Momentenhülse 30 in einer drehmomentübertragenden Verbindung. Die Radiallagernabe 28 weist Längsrillen und die vordere Momentenhülse 30 weist entsprechende Längsrillen auf, zwischen denen die Kugeln des Radiallagers 29 gelagert sind, so dass eine Drehmomentübertragung bei gleichzeitiger axialer Verschiebbarkeit zwischen diesen Elementen zur Verfügung gestellt wird.

Unter Ausbildung einer zweiten Momentenkupplung ist die vordere Momentenhülse 30 über eine zweite Freilauffeder 31 mit einer hinteren Momentenhülse 32 verbunden. Die hintere Momentenhülse 32 weist radiale Vorsprünge auf, die in entsprechende Ausnehmungen einer Nachstellspindel 33 eingreifen.

An der bremsscheibenzuwandten Seite ist an der vorderen Momentenhülse 30 ein Kugellager 34 vorgesehen, das von einem Haltering 35 eingefasst wird.

An dem Haltering 35 kommt eine Feder 36 der Rückstelleinrichtung zur Anlage. Die als Schraubenfeder konzipierte Rückstellfeder 36 wiederum stützt sich an einer Widerlagerschale 37 ab, die an dem bremsscheibenzugewandten Ende des Stabs 2 mittels einer Befestigungsmutter 38 befestigt ist. Die Widerlagerschale 37 wird hierbei zwischen einem Widerlagerring 39 und der Befestigungsmutter 38 eingespannt.

Die Hohlspindel 22 wiederum ist an dem Widerlagerring 39 über ein Axiallager 40 in einer drehbaren Lagerung abgestützt, das die auf die Hohlspindel 22 axial einwirkenden Kräfte aufnimmt.

Unter Ausbildung einer dritten Momentenkupplung ist der Widerlagerring 39 über eine dritte Freilauffeder 41 mit der Radiallagernabe 28 gekoppelt, die diese Komponenten radial außenseitig einschließt.

Während einer Bremsbetätigung, wenn eine Translationsbewegung des Lagersitzkörpers 5 die Hohlspindel 22 über den Kugelgewindetrieb 21 in Drehung versetzt, sperrt die erste Freilauffeder 27 der ersten Momentenkupplung die Kupplungshülse 25 mit der Radiallagernabe 28. Über das Radiallager 29 wird dann die Drehung entsprechend auf die vordere Momentenhülse 30 übertragen. Die entsprechend groß dimensionierte zweite Freilauffeder 31 der zweiten Momentenkupplung rutscht während des Betätigungshubs in Abhängigkeit des hierdurch definierten Drehmoments durch und begrenzt dadurch das Drehmoment gegenüber der hinteren Momentenhülse 32, die mit der Nachstellspindel 33 drehfest gekoppelt ist.

Die Drehung der vorderen Momentenhülse 30 bewirkt, dass sich die Rückstellfeder 36 über das Kugellager 34 und den Haltering 35 aufwickelt, d.h. in sich verdreht, und komprimiert wird, da der Reibungseingriff zwischen der Rückstellfeder 36 und dem Haltering 35 groß genug ist, um ein Durchrutschen zwischen dem Ende der Rückstellfeder 36 und dem Haltering 35 zu vermeiden.

Während der Bremsfreigabe, d.h. wenn keine Zuspannkraft mehr übertragen wird, bewirkt die Feder 26, dass die Mutter 24 der Rückwärtsbewegung des Lagersitzkörpers 5 folgt. Hierbei wird die Hohlspindel 22 in ihre ursprüngliche Lage zurückgedreht.

Des Weiteren wird die Rückstellfeder 36 wieder entwickelt bzw. streckt sich, wodurch über den Haltering 35 und einer weiteren Schlingfeder 42 die vordere Momentenhülse 30 in entgegengesetzter Drehrichtung in Drehung versetzt wird. In dieser Drehrichtung koppelt die zweite, entsprechend groß dimensionierte Freilauffeder 31 die vordere Momentenhülse 30 mit der hinteren Momentenhülse 32.

Das Ausmaß dieser Drehung wird jedoch begrenzt, indem die dritte Freilauffeder 41 der dritten Momentenkupplung die Drehung der Radiallagernabe 28 sozusagen abbremst, d.h. das Ausmaß der Umdrehung der Radiallagernabe 28 gemäß des nachzustellenden Maßes limitiert. Diese limitierte Umdrehung bzw. limitierten Umdrehungen wird/werden über das Radiallager 29 dann auf die vordere Momentenhülse 30 und damit dann auf die hintere Momentenhülse 32 übertragen, da in dieser Drehrichtung die beiden Momentenhülsen 30 und 32 über die zweite Freilauffeder 31 gekoppelt sind. Die Rückstellfeder 36 hört auf, sich aufzuwickeln bzw. sich zu strecken, sobald die dritte Freilauffeder 41 sperrt. Die dritte Freilauffeder 41 setzt der Kopplung durch die zweite Freilauffeder 31 quasi einen definierten Widerstand entgegen, der das nachzustellende Maß bei jedem Bremshub bestimmt. Abschließend wird diese, mit Widerstand von der dritten Freilauffeder 41 behaftete Drehung von der hinteren Momentenhülse 32 über die drehfeste Kopplung auf die Nachstellspindel 33 übertragen, was auf Grund der verdrehsicheren Führung des Druckstücks und des Gewindeeingriffs zu einer entsprechenden Nachstellung des Lüftspiels führt.

Die gemäß der Erfindung vorgesehene zusätzliche Schlingfeder 42 ist konzipiert, dass diese in ihrer nicht blockierenden Richtung bei der Nachstellung während der Bremsbetätigung aktiv ist.

Das Kugellager 34 weist ein Reibungsmoment auf, das faktisch ignoriert werden kann. Somit wird der gesamte Drehmomentwiderstand zwischen der vorderen Momentenhülse 30 und dem Haltering 35 von der Schlingfeder 42 bereitgestellt und kann dabei aufgrund der definierten Eigenschaften der Schlingfeder 42 sehr konstant gehalten werden, da der Drehmomentwiderstand hauptsächlich von der Biegevorspannung des Schlingfederdrahtes bei der Montage abhängt und nahezu vernachlässigbar von der Reibung zwischen seinen Gleitflächen ist.

## Patentansprüche

1. Scheibenbremse mit einem Bremssattel, der zumindest eine Bremsscheibe übergreift, und mit einem Bremsbetätigungsmechanismus (1;20), aufweisend:
- einen Verstärkungsmechanismus zum Einleiten einer Zuspannkraft,
- einen Nachstellmechanismus zum Ausgleich eines Belagverschleißes mit einer Drehmomentkupplung,
- ein Druckelement zum Übertragen der Zuspannkraft auf die Bremsscheibe, wobei das Druckelement eine Nachstellspindel (7;33) aufweist, die in einem Gewindeeingriff mit einem Druckstück steht, das mit einem Bremsbelag zusammenwirkt, wobei das Druckstück axial und nicht-drehbar in dem Gehäuse des Bremssattels so geführt ist, dass eine Drehung der Nachstellspindel in einer axialen Verschiebung des Druckstücks resultiert, wobei die Nachstellspindel (7;33) von dem Nachstellmechanismus betätigbar ist, und
- eine Rückstellvorrichtung,
wobei der Verstärkungsmechanismus, der Nachstellmechanismus, das Druckelement und die Rückstellvorrichtung in einer funktional zusammenwirkenden Art und Weise mittels eines Stabs in dem Bremssattel montiert sind, der in dem Gehäuse des Bremssattels in Axialrichtung nicht beweglich und nicht drehbar gelagert ist,
**gekennzeichnet durch**
zumindest ein Mittel (15,16,17;34,35,42), das ausgestaltet ist, während des Nachstellvorgangs beim Bremsvorgang inaktiv zu sein und bei Bremsfreigabe und/oder im freigegebenen Zustand der Bremse ein definiertes Widerstandsmoment gegen ein Drehen der Nachstellspindel (7;33) zur Verfügung zu stellen.

2. Scheibenbremse nach Anspruch 1, bei der das Mittel (15,16,17;34,35,42) ausgelegt ist, die Reibung zwischen einzelnen Bauteilen des Nachstellmechanismus um ein definiertes Maß zu erhöhen.

3. Scheibenbremse nach Anspruch 1 oder 2, bei der das Mittel als eine Schlingfeder (15;42) ausgebildet ist, die so konzipiert ist, dass deren Freilauf bei Bremsbetätigung und deren Sperrwirkung bei Bremsfreigabe und/oder im freigegebenen Zustand wirkt.

4. Scheibenbremse nach Anspruch 3, bei der die Schlingfeder (15) mittelbar oder unmittelbar mit der Nachstellspindel (7) gekoppelt ist.

5. Scheibenbremse nach Anspruch 4, bei der die Schlingfeder (15) eine Hülse (16) mit der Nachstellspindel (7) koppelt, die radial innenseitig in der Nachstellspindel (7) aufgenommen ist.

6. Scheibenbremse nach Anspruch 5, bei der die Hülse (16) mit der Rückstellvorrichtung drehfest gekoppelt ist.

7. Scheibenbremse nach Anspruch 3, bei der die Schlingfeder (42) mittelbar oder unmittelbar mit dem Nachstellmechanismus gekoppelt ist.

8. Scheibenbremse nach Anspruch 7, bei der die Schlingfeder (15) die Rückstellvorrichtung mit der Nachstellvorrichtung koppelt.

9. Scheibenbremse nach Anspruch 8, bei der die Schlingfeder (15) eine Rückstellfeder (36) mit der Nachstellvorrichtung unter Zwischenschaltung eines Kugellagers (34) koppelt.

## Claims

1. Disc brake having a brake caliper straddling at least one brake disc and a brake actuating mechanism (1;20) comprising:
- an amplification mechanism for introducing a clamping force,
- an adjusting mechanism for compensating for pad wear having a torque clutch,
- a thrust element for transmitting the clamping force to the brake disc, the thrust element comprising an adjustment spindle (7;33) threadedly engaged with a thrust piece cooperating with a brake pad, the thrust piece being axially and non-rotatably guided in the housing of the brake caliper such that rotation of the adjustment spindle results in axial displacement of the thrust piece, the adjustment spindle (7;33) being operable by the adjusting mechanism, and
- a resetting device,
wherein the amplification mechanism, the adjusting mechanism, the thrust element and the resetting device are mounted in a functionally cooperating manner by means of a rod in the brake caliper, which rod is supported in the housing of the brake caliper in a non-movable and non-rotatable manner in the axial direction,
**characterized by**
at least one means (15,16,17;34,35,42) which is designed to be inactive during the adjustment process when the brake is applied and to provide a defined resisting torque against rotation of the adjustment spindle (7;33) when the brake is released and/or in the released state of the brake.

2. Disc brake of claim 1, in which the means (15,16,17;34,35,42) is adapted to increase the friction between individual components of the adjusting mechanism by a defined amount.

3. Disc brake according to claim 1 or 2, in which the means is formed as a wrap spring (15;42) which is designed such that its freewheeling acts when the brake is applied and its locking action acts when the brake is released and/or in the released state.

4. Disc brake according to claim 3, in which the wrap spring (15) is coupled directly or indirectly to the adjustment spindle (7).

5. Disc brake according to claim 4, in which the wrap spring (15) couples a sleeve (16) to the adjustment spindle (7), the sleeve (16) being received radially inwardly in the adjustment spindle (7).

6. Disc brake of claim 5, in which the sleeve (16) is coupled to the resetting device in a rotationally fixed manner.

7. Disc brake of claim 3, in which the wrap spring (42) is coupled directly or indirectly to the adjusting mechanism.

8. Disc brake of claim 7, in which the wrap spring (15) couples the resetting device to the adjusting device.

9. Disc brake of claim 8, in which the wrap spring (15) couples a return spring (36) to the adjusting device with a ball bearing (34) interposed therebetween.

## Revendications

1. Frein à disque, avec un étrier de frein qui chevauche au moins un disque de frein et avec un mécanisme de commande de frein (1 ; 20), présentant :
- un mécanisme d'amplification destiné à déclencher une force d'application de freinage,
- un mécanisme de rattrapage destiné à compenser une usure de garniture avec un embrayage à couple,
- un élément de pression destiné à transmettre la force d'application de freinage sur le disque de frein, l'élément de pression présentant un arbre de rattrapage (7 ; 33) qui se trouve en engrènement par filetage avec une pièce de pression qui coopère avec une garniture de frein, la pièce de pression étant dirigée axialement et de manière non-rotative dans le boîtier de l'étrier de frein de sorte qu'il en résulte une rotation de l'arbre de rattrapage dans un déplacement axial de la pièce de pression, l'arbre de rattrapage (7 ; 33) pouvant être commandé par le mécanisme de rattrapage, et
- un dispositif de rappel,
dans lequel le mécanisme d'amplification, le mécanisme de rattrapage, l'élément de pression et le dispositif de rappel sont montés de manière à coopérer en fonctionnement au moyen d'une barre dans l'étrier de frein qui est montée de manière non-mobile et non-rotative dans la direction axiale dans le boîtier de l'étrier de frein,
**caractérisé par**
au moins un moyen (15, 16, 17 ; 34, 35, 42) qui est agencé pour être inactif lors du processus de freinage pendant le processus de rattrapage et pour rendre disponible, lors de la libération du frein et/ou dans l'état libéré du frein, un couple de résistance défini contre une rotation de l'arbre de rattrapage (7 ; 33).

2. Frein à disque selon la revendication 1, dans lequel le moyen (15, 16, 17 ; 34, 35, 42) est conçu pour augmenter le frottement d'un certain degré entre des composants individuels du mécanisme de rattrapage.

3. Frein à disque selon la revendication 1 ou 2, dans lequel le moyen est réalisé sous la forme d'un ressort enroulé (15 ; 42) qui est conçu de manière à actionner sa roue libre lors de la commande du frein et son action de blocage lors de la libération du frein et/ou dans l'état libéré.

4. Frein à disque selon la revendication 3, dans lequel le ressort enroulé (15) est couplé directement ou indirectement avec l'arbre de rattrapage (7).

5. Frein à disque selon la revendication 4, dans lequel le ressort enroulé (15) couple une douille (16) avec l'arbre de rattrapage (7), laquelle est reçue radialement du côté intérieur dans l'arbre de rattrapage (7).

6. Frein à disque selon la revendication 5, dans lequel la douille (16) est couplée avec le dispositif de rappel de manière solidaire en rotation.

7. Frein à disque selon la revendication 3, dans lequel le ressort enroulé (42) est couplé directement ou indirectement avec le mécanisme de rattrapage.

8. Frein à disque selon la revendication 7, dans lequel le ressort enroulé (15) couple le dispositif de rappel avec le dispositif de rattrapage.

9. Frein à disque selon la revendication 8, dans lequel le ressort enroulé (15) couple un ressort de rappel (36) avec le dispositif de rattrapage en interposant un roulement à billes (34) .
